# EUROPEAN PATENT SPECIFICATION

(11) **EP 3 462 234 B1**
(45) Date of publication and mention of the grant of the patent: **13.04.2022**
(21) Application number: 17909202.8
(22) Date of filing: 26.09.2017
(51) Int. Cl.: G02F 1/13357, G02F 1/1333, G06F 3/0354, G06F 3/046, G06F 3/041

(54) **DIRECT-TYPE BACKLIGHT DISPLAY MODULE AND DISPLAY DEVICE**
ANZEIGEMODUL MIT DIREKTER RÜCKBELEUCHTUNG UND ANZEIGEVORRICHTUNG
MODULE D'AFFICHAGE DE RÉTROÉCLAIRAGE DE TYPE DIRECT ET DISPOSITIF D'AFFICHAGE

(30) Priority: 12.05.2017 CN 201710335387
(43) Date of publication of application: 03.04.2019
(73) Proprietor: Guangzhou Shiyuan Electronics Co., Ltd., Guangzhou, Guangdong 510530 (CN); Guangzhou Shirui Electronics Co., Ltd., Guangzhou, Guangdong 510663 (CN)
(72) Inventor: HOU, Minxiang, Guangdong 510663 (CN)
(74) Representative: dompatent von Kreisler Selting Werner - Partnerschaft von Patent- und Rechtsanwälten mbB
(86) International application number: PCT/CN2017/103433
(87) International publication number: WO 2018/205484

(56) References cited:
- EP-A1- 2 148 238
- CN-A- 1 534 333
- CN-A- 101 498 849
- CN-A- 106 980 207
- CN-A- 107 037 626
- JP-A- H 086 721
- JP-A- H07 104 935
- US-A1- 2013 215 072
- US-A1- 2016 048 247
- US-A1- 2016 139 442
- US-B2- 9 285 941

## Description

### TECHNICAL FIELD

The present invention relates to the field of display device technologies, and in particular, to a direct type backlight display module and a display device.

### BACKGROUND

In conventional technologies, the liquid crystal display has become a mainstream display in the market due to its low electromagnetic radiation, low power consumption, low heat generation, light weight and the like, and the LED (Light Emitting Diode) backlight display has also been widely used. At present, the LED backlight display on the market is mainly divided into two types of an edge type and a direct type, according to the light incident mode. The edge type is to mount a LED light string around the liquid crystal screen as the backlight module, while the direct type is to mount a LED light string on the right back side of the liquid crystal screen as the backlight module. The direct type backlight display is relatively less expensive and more widely used.

However, in the conventional technologies, the direct type backlight display may only be used as a display and is mono-functioning. With the development of input technologies and display technologies, the combination of commonly used liquid crystal displays and touch apparatus is a market development trend. Moreover, the experience demand for touch input by the market is also becoming higher and higher, such as the pursuit of the original handwriting trajectory input effect, so the electromagnetic screen technology has been widely used. However, in the electromagnetic screen technology, it usually requires the electromagnetic board to be mounted on the liquid crystal screen. For the LED backlight display of edge type, since the light source is disposed around the liquid crystal screen, when the electromagnetic board is mounted on the liquid crystal screen, it does not affect the effect of the light source on the liquid crystal screen; however, for the direct type LED backlight display, since the light source is disposed on the right back side of the liquid crystal screen, when the electromagnetic board is mounted on the liquid crystal screen, the effect of the light source on the liquid crystal screen is seriously affected. US Patent Application Publication US 2016/0048247A1 discloses a touch display panel including: a backlight unit including a plurality of light-emitting devices; and a touch sensor sheet disposed on the backlight unit, comprising at least one hole corresponding to at least one of the plurality of light-emitting devices and a touch sensor configured to sense a user touch on the touch display panel.EP Patent Application Publication EP 2148238 A, on which the preamble of claim 1 is based, discloses a digitizer function-equipped liquid crystal display device comprising: a liquid crystal panel; a light diffusion member disposed between the liquid crystal panel and a backlight irradiating the liquid crystal panel with light; an electromagnetic induction type loop antenna provided at a position with a distance which directs from the light diffusion member to the backlight, which detects a position of the plane of the liquid crystal panel for one direction of one axis and for another direction of one axis intersecting the one direction of one axis; and spacing retaining means for retaining the spacing between the light diffusion member and the loop antenna. JP Patent Application Publication H07104935A discloses a Liquid crystal display device with digitizer sensor, comprising: a sensor line network which consists of the group of first extra fine insulated conductor sensor lines SX and group of second extra fine insulated conductor sensor lines orthogonally crossing the group of the first sensor lines SX is laid and fixed to the plane face of a light spreading board of a liquid crystal display device in which a liquid crystal display panel, light spreading board, light source, an reflector are successively arranged. JP Patent Application Publication H086721A discloses a Coordinate input device comprising: a display panel having a display surface ; a surface light source unit for improving visibility of the display surface of the display panel; When the input device approaches a required position on the display surface of the display panel, a coordinate detection unit, wherein the coordinate detection units are integrated with the surface light source units.

### SUMMARY

Based on the above, provided herein is a direct type backlight display module and a display device, which may integrate an electromagnetic touch input into the direct type backlight display module, and may also ensure that the liquid crystal screen has a good display effect.

Technical solutions provided herein will be described as follows.

A direct type backlight display module is provided, including all the features of appended claim 1.

The following is a description of further technical solutions.

Further, the electromagnetic diaphragm and the diffusion plate have the same shape and area, and edges of the electromagnetic diaphragm are aligned with edges of the diffusion plate; or
the area of the electromagnetic diaphragm is smaller than the area of the diffusion plate, and the electromagnetic diaphragm is located at a certain location on a circumferential side of the diffusion plate.

Further, the direct type backlight display module also includes a touch input module disposed on the liquid crystal panel, the touch input module includes a touch input board disposed on the liquid crystal panel and a touch control circuit connected to the touch input board, and the touch control circuit is connected to the main control circuit.

Further, the direct type backlight display module also includes a middle frame structure, and the diffusion plate, an optical diaphragm assembly, the electromagnetic diaphragm and the liquid crystal panel are all fixed in the middle frame structure.

Further, the optical diaphragm assembly includes a reflective diaphragm, a brightness enhancement diaphragm, and a diffusion diaphragm which are sequentially stacked, the reflective diaphragm corresponds to the diffusion plate each other, and the diffusion diaphragm corresponding to the liquid crystal panel each other. The brightness enhancement diaphragm includes a prism diaphragm, a microlens and a reflective polarizing plate which are sequentially disposed, the prism diaphragm corresponds to the reflective diaphragm each other, and the reflective polarizing plate corresponds to the diffusion diaphragm each other.

Further, the light emitting structure includes a direct type light bar disposed on the back plate and directly facing the diffusion plate, and a reflective plate surrounding a bottom side and a circumference side of the direct type light bar; and the reflective plate corresponds to the diffusion plate each other.

In addition, provided herein is also a display device including the direct type backlight display module as described above.

The invention has following beneficial effects. By combining the electromagnetic input technology and the direct type backlight display module, the integration of the electromagnetic input and the backlight display in the direct type backlight mode is achieved at a low cost, and multi-function of the direct type backlight display module is realized. Moreover, not only the liquid crystal display function but also the touch and trajectory imitation may be realized, and the real handwriting may also be imitated, thereby having a good user experience.

### BRIEF DESCRIPTION OF DRAWINGS

FIG. 1 is a schematic structural diagram illustrating a direct type backlight display device according to the present invention.
FIG. 2 is a schematic block diagram illustrating a direct type backlight display device (with an electromagnetic diaphragm disposed between an diffusion plate and an liquid crystal panel) not according to the present invention.
FIG. 3 is a schematic block diagram illustrating a direct type backlight display device (with an electromagnetic diaphragm disposed between a light emitting structure and a diffusion plate) according to the present invention.
FIG. 4 is a schematic block diagram illustrating a direct type backlight display device (with an electromagnetic diaphragm disposed in a diffusior plate) not according to the present invention.

### Description of the reference numerals:

100-backlight module, 110-back plate, 120-direct type light bar, 130-reflective plate, 140-diffusion plate, 150-optical diaphragm assembly, 200-electromagnetic input module, 210-electromagnetic diaphragm, 300-liquid crystal panel, 310-tempered glass, and 400-main control circuit.

### DESCRIPTION OF EMBODIMENTS

The embodiments of the present invention will be described in detail below with reference to the accompanying drawings.

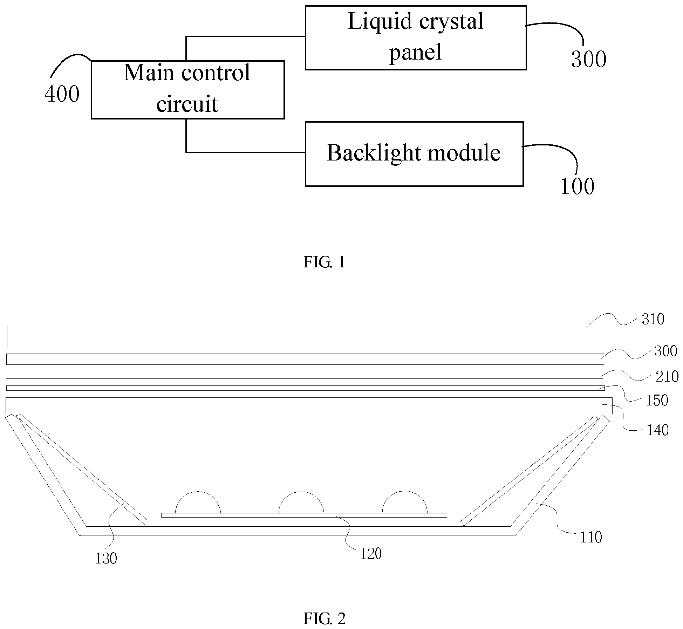

As shown in FIG. 1, an embodiment of the present invention provides a direct type backlight display module, including a backlight module 100 and a liquid crystal panel 300 corresponding to each other, and a main control circuit connected to the backlight module 100 and the liquid crystal panel 300. The main control circuit is configured to be connected to the backlight module 100 and the liquid crystal panel 300 so that the backlight module 100 and the liquid crystal panel 300 are controllable, to facilitate liquid crystal display or other functions.

Moreover, as shown in FIG. 2 to FIG. 4, the backlight module 100 includes a back plate 110, a light emitting structure disposed on the back plate 110, a diffusion plate 140 directly facing the light emitting structure, and an electromagnetic input module 200 disposed between the light emitting structure and the liquid crystal panel 300, The back plate 110 provides a mounting base for the entire backlight module 100, and the light emitting structure emits light to illuminate the liquid crystal panel 300, Moreover, by providing the electromagnetic input module 200 between the backlight module 100 and the liquid crystal panel 300, electromagnetic input may be realized on the direct type backlight display module. In such way, the electromagnetic input technology may be combined with the direct type backlight display module, an integration of the electromagnetic input and the backlight display in the direct type backlight mode may be achieved at a low cost, and the multi-function of the direct type backlight display module may be realized. Moreover, the direct type backlight display module may not only realize the liquid crystal display function, but also the touch and trajectory imitation, and may also imitate the real handwriting trajectory, thereby having a good user experience.

In addition, the light emitting structure includes a direct type light bar 120 disposed on the back plate 110 and directly facing the diffusion plate 140, and a reflective plate 130 surrounding a bottom side and a circumference side of the direct type light bar 120. The reflective plate 130 corresponds to the diffusion plate 140 each other. The direct type light bar 120 may emit a light beam to the diffusion plate 140, and the diffusion plate 140 may change the angle of the light beam. After the light beam passes through the diffusion plate 140, the angle of the light beam becomes 160-170 degrees. Moreover, the diffusion plate 140 may also fog an image to improve the uniformity of the image. In addition, the diffusion plate 140 also has a certain rigidity to facilitate supporting the optical diaphragm assembly 150. In addition, the reflective plate 130 may reflect part of the exposed light to the diffusion plate 140 to allow a secondary use of the light, thereby improving the utilization efficiency of the light and improving the brightness. Moreover, the reflective plate 130 is disposed as semi-surrounding on one side of the direct type light bar 120, and the light emitted by the direct type light bar 120 may be sufficiently reflected to improve the light utilization efficiency better.

In addition, the optical diaphragm assembly 150 includes a reflective diaphragm, a brightness enhancement diaphragm, and a diffusion diaphragm which are sequentially stacked. The reflective diaphragm corresponds to the diffusion plate 140 each other, and the diffusion diaphragm corresponds to the electromagnetic input module 200 each other. The optical diaphragm assembly 150 may further process the light for better light effects. The light is reflected multiple times by the reflective diaphragm to further improve the light utilization efficiency and enhance the brightness. In addition, the brightness of the light may be further enhanced by the brightness enhancement diaphragm to enhance the display intensity effect. In addition, the diffusion diaphragm may further fog the image, improving the viewing angle, and enhancing the brightness. Moreover, the brightness enhancement diaphragm includes a prism diaphragm, a microlens or a reflective polarizing plate. The light is further processed by using the prism diaphragm, the microlens and the reflective polarizing plate, to further enhance the brightness and ensure the viewing angle.

In addition, the electromagnetic input module 200 includes an electromagnetic diaphragm 210 disposed between the light emitting structure and the liquid crystal panel 300, and an electromagnetic control circuit electrically connected to the electromagnetic diaphragm 210. The electromagnetic diaphragm has a transmittance greater than or equal to 50%. The electromagnetic diaphragm 210 is connected to the main control circuit 400 through the electromagnetic control circuit. In addition, the electromagnetic input module 200 further includes an electromagnetic pen that cooperates with the electromagnetic diaphragm 210. By providing the transparent electromagnetic diaphragm 210, an electromagnetic input capability may be obtained by the direct type backlight display module, while good transmittance may be ensured for the liquid crystal panel, so that the display image quality and brightness are not affected by the electromagnetic diaphragm 210, thereby having precise touch, while ensuring the best image performance and display effect of the screen. The electromagnetic pen may be used to provide input through the liquid crystal panel 300, and the electromagnetic plate 210 disposed on the liquid crystal panel 300 may sense the input by writing of the electromagnetic pen, thereby transmitting a precise handwriting mode and imitating the effect of the thickness with respect to the diameter of a pen when writing with a pen in reality, and getting a good original handwriting trajectory input experience. Moreover, the electromagnetic diaphragm 210 may be controlled by the electromagnetic control circuit, and the electromagnetic input function may be conveniently enabled, disabled and adjusted.

Moreover, in some embodiments, as shown in FIG. 2, the electromagnetic diaphragm 200 may be disposed between the diffusion plate 140 and the liquid crystal panel 300. Moreover, in some embodiments, the electromagnetic diaphragm 210 may be disposed between any two of the reflective diaphragm, the brightness enhancement diaphragm and the diffusion diaphragm. That is, the electromagnetic diaphragm 210 may be disposed between the reflective diaphragm and the brightness enhancement diaphragm, or may be disposed between the brightness enhancement diaphragm and the diffusion diaphragm. Further, the electromagnetic diaphragm 210 may be disposed between any two of the prism diaphragm, the microlens and the reflective polarizing plate. That is, the electromagnetic diaphragm 210 may be disposed between the prism diaphragm and the microlens, or may be disposed between the microlens and the reflective polarizing plate. Alternatively, the electromagnetic diaphragm 210 may be disposed between the prism diaphragm and the reflective diaphragm, or the electromagnetic diaphragm 210 may be disposed between the reflective polarizing plate and the diffusion diaphragm. In addition, in other embodiments, the electromagnetic diaphragm 210 may be disposed between the reflective diaphragm and the diffusion plate 140 or between the diffusion diaphragm and the liquid crystal panel 300. All those configurations are no embodiments of the present invention. Nevertheless, when the electromagnetic diaphragm 210 is disposed at these positions, a good electromagnetic input effect may be achieved without affecting the display function of the liquid crystal panel.

In addition, in some embodiments, the electromagnetic diaphragm 210, the liquid crystal panel 300 and the optical diaphragm assembly 150 have the same shape and area, and edges of the electromagnetic diaphragm 210 are aligned with both edges of the liquid crystal panel 300 and edges of the optical diaphragm assembly 150. That is, the electromagnetic diaphragm 210 is completely aligned with the liquid crystal panel 300 and the optical diaphragm assembly 150, and the electromagnetic diaphragm 210 completely covers the liquid crystal panel 300, so that the entire liquid crystal panel 300 can obtain an electromagnetic input effect thereon, In addition, in other embodiments, the electromagnetic diaphragm 210 has an area smaller than that of the liquid crystal panel 300 or that of the optical diaphragm assembly 150, and the electromagnetic diaphragm 210 is located at a certain location on a circumference side of the liquid crystal panel 300 or on a circumference side of the optical diaphragm assembly 150. That is, the electromagnetic diaphragm 210 is not completely aligned with the liquid crystal panel 300 and the optical diaphragm assembly 150, but only aligned with a certain portion of the liquid crystal panel 300, and only the aligned portion has an electromagnetic input effect thereon, to satisfy a different use need.

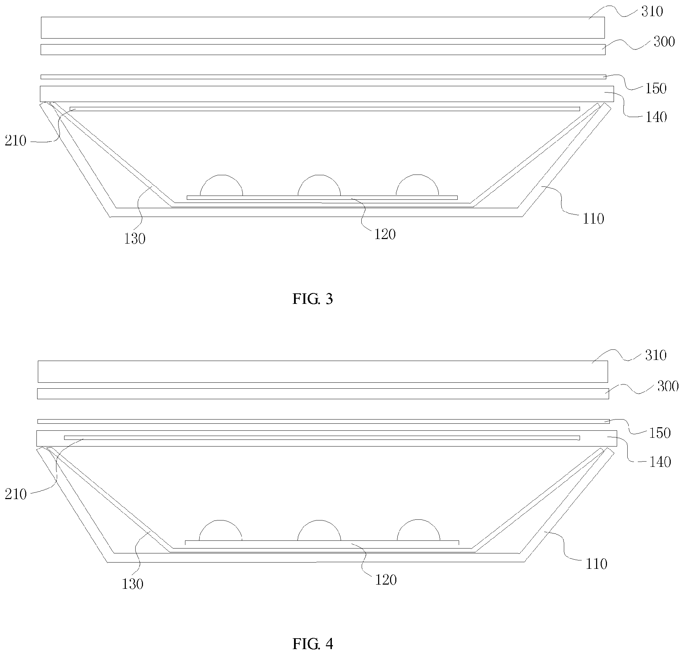

In addition, in other embodiments, as shown in FIG. 3, the electromagnetic diaphragm 200 is - according to the present invention - disposed between the light emitting structure and the diffusion plate 140. That is, the electromagnetic diaphragm 200 may be kept at a certain distance from the diffusion plate 140, or the electromagnetic diaphragm 200 may be attached onto the diffusion plate 140, When the electromagnetic diaphragm 200 is disposed between the light emitting structure and the diffusion plate 140, an electromagnetic input function may also be realized. Moreover, a distance between the electromagnetic diaphragm 200 and the light emitting structure may be greater than or equal to 10 cm. Specifically, the distance between the electromagnetic diaphragm 200 and the direct type light bar 120 may be greater than or equal to 10 cm. Because the electromagnetic diaphragm 200 may be provided with an electromagnetic coil, and an eddy current may be generated in the electromagnetic coil, if the distance between the direct type light bar 120 and the electromagnetic diaphragm is less than 10 cm, the eddy current in the electromagnetic coil may be affected, and the normal operation of the electromagnetic diaphragm 200 may also be affected. In addition, a silicon steel plate is disposed between the electromagnetic diaphragm 200 and the direct type light bar 120 to isolate the influence of the direct type light bar 120 on the electromagnetic diaphragm 200.

Moreover, in some embodiments, the electromagnetic diaphragm 210 and the diffusion plate 140 have the same shape and area, and edges of the electromagnetic diaphragm 210 are aligned with edges of the diffusion plate 140. That is, the electromagnetic diaphragm 210 is completely aligned with the diffusion plate 140, and the electromagnetic diaphragm 210 completely covers the diffusion plate 140, so that the entire diffusion plate 140 may all obtain electromagnetic input effects thereon. Further, in other embodiments, the area of the electromagnetic diaphragm 210 is smaller than the area of the diffusion plate 140, and the electromagnetic diaphragm 210 is located at a certain location on the circumferential side of the diffusion plate 140. That is, the electromagnetic diaphragm 210 is not completely aligned with the diffusion plate 140, but only locates at a certain portion of the diffusion plate 140, and only the aligned portion has an electromagnetic input effect thereon, to satisfy a different use need.

In addition, in other embodiments, as shown in FIG. 4, the electromagnetic diaphragm 200 may also be directly disposed in the diffusion plate 140, and the electromagnetic input function may also be realized.

In addition, the direct type backlight display module further includes a touch input module disposed on the liquid crystal panel 300, and the touch input module includes a touch input board disposed on the liquid crystal panel 300 (at a air side), and a touch control circuit connected to the touch input board. The touch control circuit is connected to the main control circuit. The touch input board may be controlled by the touch control circuit to enable, disable and adjust the touch input function, so that the direct type backlight display module has a common touch input function. Moreover, the touch input board of the touch input module also has good transmittance, and does not affect the display effect of the direct type backlight display module. In addition, the conventional touch input module does not need to perform extra reaction to the weight of the input pressure, and may be operated by either a hand or a dedicated pen. The electromagnetic input module may sense the weight of the input pressure, and may imitate real writing trajectory, but a dedicated electromagnetic pen is required in order to play its professionalism. The touch input module as well as the electromagnetic input module may be disposed on both sides of the liquid crystal panel 300 simultaneously, or may be separately disposed on a surface of the air side of the liquid crystal panel 300. In such way, it is possible to meet different use needs at the same time.

Moreover, the touch input module may be configured as a capacitive input module or an infrared input module. When the touch input module is configured as a capacitive input module, the capacitive input module includes a capacitive input board disposed on the liquid crystal panel 300 (at the air side), and a capacitance control circuit connected to the capacitive input board. The capacitance control circuit is connected to the main control circuit. When the touch input module is configured as an infrared input module, the infrared input module includes an infrared sensor board disposed on the liquid crystal panel 300 (at the air side), and an infrared control circuit connected to the infrared sensor board. The infrared control circuit is connected to the main control circuit.

In addition, the direct type backlight display module further includes a tempered glass 310 disposed on a surface of the touch input board. With the tempered glass 310, the touch input board and the liquid crystal panel 300 may be protected. In addition, when an capacitor input structure is not available, the tempered glass 310 may be directly disposed on the air side surface of the liquid crystal panel 300 to directly protect the liquid crystal panel 300.

In addition, the direct type backlight display module further includes a middle frame structure, and the diffusion plate, the optical diaphragm assembly, the electromagnetic diaphragm and the liquid crystal panel are all fixed therein. With the middle frame structure, a mounting base and a protective housing may be provided for the diffusion plate 140, the optical diaphragm assembly 150, the electromagnetic diaphragm 210 and the liquid crystal panel 300, so as to make their structures more firm and reliable. In addition, the main control circuit, the electromagnetic control circuit and the touch control circuit may also be disposed on the middle frame structure.

In addition, the present invention also provides a display device including the direct type backlight display module as described above. The direct type backlight display module and the display device provided by the invention realize the integration of the electromagnetic input and the backlight display in the direct type backlight mode at a low cost by setting the electromagnetic input technology and the direct type backlight display module as a whole, and the multi-function of the direct type backlight display module is achieved. Moreover, not only the liquid crystal display function but also the touch and trajectory imitation may be realized, and the real handwriting trajectory may also be imitated, thereby having a good user experience.

The technical features of the above-described embodiments may be combined in any combination. To make the description concise, all possible combinations of the technical features in the embodiments are not described. However, as long as there is no contradiction in the combination of these technical features, it should be considered as the scope of this description.

The above-described embodiments are merely illustrative of several embodiments of the present invention, and the description thereof is more specific and detailed, but is not to be construed as limiting the scope of the invention. It should be noted that a number of variations and modifications may be made by those skilled in the art without departing from the scope of the invention. Therefore, the scope of the invention should be determined by the appended claims.

## Claims

1. A direct type backlight display module, comprising: a backlight module (100) and a liquid crystal panel (300) corresponding to each other; and a main control circuit ( 400) connected to the backlight module (100) and the liquid crystal panel (300), wherein:
the backlight module (100) comprises a back plate (110), a light emitting structure disposed on the back plate (110), a diffusion plate (140) directly facing the light emitting structure, and an electromagnetic input module (200) disposed between the light emitting structure and the liquid crystal panel (300); and
the electromagnetic input module (200) comprises an electromagnetic diaphragm (210), which is an electromagnetic plate arranged to cooperate with an electromagnetic pen, and an electromagnetic control circuit electrically connected to the electromagnetic diaphragm (210), and the electromagnetic diaphragm (210) is connected to the main control circuit ( 400) through the electromagnetic control circuit, the electromagnetic diaphragm (210) is disposed between the light emitting structure and the liquid crystal panel (300),
the electromagnetic diaphragm (210) is disposed between the light emitting structure and the diffusion plate (140), **characterised in that** the electromagnetic diaphragm (210) is transparent so as to have a transmittance greater than or equal to 50 %, **in that**
a distance between the electromagnetic diaphragm (210) and the light emitting structure is greater than or equal to 10 cm,
and
**in that** a silicon steel plate is disposed between the electromagnetic diaphragm (210) and the light emitting structure.

2. The direct type backlight display module according to any one of claim 1, **characterized in that**: the electromagnetic diaphragm (210) and the diffusion plate (140) have the same shape and area, and edges of the electromagnetic diaphragm are aligned with edges of the diffusion plate (140); or
an area of the electromagnetic diaphragm (210) is smaller than an area of the diffusion plate (140), and the electromagnetic diaphragm (210) is located at a certain location on a circumferential side of the diffusion plate (140).

3. The direct type backlight display module according to any one of claim 1, **characterized in that** the direct type backlight display module further comprises a touch input module disposed on the liquid crystal panel (300), the touch input module comprises a touch input board disposed on the liquid crystal panel and a touch control circuit connected to the touch input board, and the touch control circuit is connected to the main control circuit ( 400).

4. The direct type backlight display module according to any one of claim 1, **characterized by** further comprising: an optical diaphragm assembly (150) comprising a reflective diaphragm, a brightness enhancement diaphragm, and a diffusion diaphragm which are sequentially stacked,
wherein the reflective diaphragm is aligned with the diffusion plate (140), and the diffusion diaphragm is aligned with the liquid crystal panel (300); and
the brightness enhancement diaphragm comprises a prism diaphragm, a microlens and a reflective polarizing plate which are sequentially disposed, the prism diaphragm is aligned with the reflective diaphragm, and the reflective polarizing plate is aligned with the diffusion diaphragm.

5. The direct type backlight display module according to any one of claim 1, **characterized in that** the light emitting structure comprises a direct type light bar (120) disposed on the back plate (110) and directly facing the diffusion plate (140), and a reflective plate (130) surrounding a bottom side and a circumference side of the direct type light bar (120); the reflective plate (130) is aligned with the diffusion plate (140).

6. A display device, **characterized by** comprising the direct type backlight display module according to any one of claims 1 to 5.

## Patentansprüche

1. Anzeigemodul mit direkter Hinterleuchtung, das aufweist: ein Hinterleuchtungsmodul (100) und einen Flüssigkristallbildschirm (300), die einander entsprechen; und eine Hauptsteuerschaltung (400), die mit dem Hinterleuchtungsmodul (100) und dem Flüssigkristallbildschirm (300) verbunden ist, wobei:
das Hinterleuchtungsmodul (100) eine Rückplatte (110), eine lichtemittierende Struktur, die auf der Rückplatte (110) angeordnet ist, eine Diffusionsplatte (140), die der lichtemittierenden Struktur direkt zugewandt ist, und ein elektromagnetisches Eingabemodul (200), das zwischen der lichtemittierenden Struktur und dem Flüssigkristallbildschirm (300) angeordnet ist, aufweist; und
das elektromagnetische Eingabemodul (200) eine elektromagnetische Blende (210), die eine elektromagnetische Platte ist, die derart ausgebildet ist, dass sie mit einem elektromagnetischen Stift zusammenwirkt, und eine elektromagnetische Steuerschaltung, die elektrisch mit der elektromagnetischen Blende (210) verbunden ist, aufweist und die elektromagnetische Blende (210) durch die elektromagnetische Steuerschaltung mit der Hauptsteuerschaltung (400) verbunden ist, die elektromagnetische Blende (210) zwischen der lichtemittierenden Struktur und dem Flüssigkristallbildschirm (300) angeordnet ist,
die elektromagnetische Blende (210) zwischen der lichtemittierenden Struktur und der Diffusionsplatte (140) angeordnet ist,
**dadurch gekennzeichnet, dass**
die elektromagnetische Blende (210) transparent ist, so dass sie eine Durchlässigkeit hat, die größer als oder gleich 50 % ist, ein Abstand zwischen der elektromagnetischen Blende (210) und der lichtemittierenden Struktur größer als oder gleich 10 cm ist und eine Siliziumstahlplatte zwischen der elektromagnetischen Blende (210) und der lichtemittierenden Struktur angeordnet ist.

2. Anzeigemodul mit direkter Hinterleuchtung nach Anspruch 1, **dadurch gekennzeichnet, dass**: die elektromagnetische Blende (210) und die Diffusionsplatte (140) die gleiche Form und Fläche haben und Ränder der elektromagnetischen Blende mit Rändern der Diffusionsplatte (140) ausgerichtet sind; oder
eine Fläche der elektromagnetischen Blende (210) kleiner ist als eine Fläche der Diffusionsplatte (140) und sich die elektromagnetische Blende (210) an einer bestimmten Stelle auf einer Umfangsseite der Diffusionsplatte (140) befindet.

3. Anzeigemodul mit direkter Hinterleuchtung nach Anspruch 1, **dadurch gekennzeichnet, dass** das Anzeigemodul mit direkter Hinterleuchtung ferner ein Berührungseingabemodul aufweist, das auf dem Flüssigkristallbildschirm (300) angeordnet ist, das Berührungsanzeigemodul eine Berührungseingabeplatine, die auf dem Flüssigkristallbildschirm angeordnet ist, und eine Berührungssteuerschaltung, die mit der Berührungseingabeplatine verbunden ist, aufweist und die Berührungssteuerschaltung mit der Hauptsteuerschaltung (400) verbunden ist.

4. Anzeigemodul mit direkter Hinterleuchtung nach Anspruch 1, **dadurch gekennzeichnet, dass** es ferner aufweist: eine optische Blendenanordnung (150), die eine Reflexionsblende, eine Helligkeitsverstärkungsblende und eine Diffusionsblende, die sequenziell gestapelt sind, aufweist,
wobei die Reflexionsblende mit der Diffusionsplatte (140) ausgerichtet ist und die Diffusionsblende mit dem Flüssigkristallbildschirm (300) ausgerichtet ist; und
die Helligkeitsverstärkungsblende eine Prismenblende, eine Mikrolinse und eine reflektierende Polarisierungsplatte aufweist, die sequenziell angeordnet sind, die Prismenblende mit der Reflexionsblende ausgerichtet ist und die reflektierende Polarisierungsplatte mit der Diffusionsblende ausgerichtet ist.

5. Anzeigemodul mit direkter Hinterleuchtung nach Anspruch 1, **dadurch gekennzeichnet, dass** die lichtemittierende Struktur eine Direktlichtleiste (120), die auf der Rückplatte (110) angeordnet ist und der Diffusionsplatte (140) direkt zugewandt ist, und eine Reflexionsplatte (130), die eine untere Seite und eine Umfangsseite der Direktlichtleiste (120) umgibt, aufweist; die Reflexionsplatte (130) mit der Diffusionsplatte (140 ) ausgerichtet ist.

6. Anzeigevorrichtung, **dadurch gekennzeichnet, dass** sie das Anzeigemodul mit direkter Hinterleuchtung nach einem der Ansprüche 1 bis 5 aufweist.

## Revendications

1. Module d'affichage de rétroéclairage de type direct, comprenant : un module de rétroéclairage (100) et un panneau à cristaux liquides (300) correspondant l'un à l'autre ; et un circuit de commande principal (400) connecté au module de rétroéclairage (100) et au panneau à cristaux liquides (300), dans lequel :
le module de rétroéclairage (100) comprend une plaque arrière (110), une structure électroluminescente disposée sur la plaque arrière (110), une plaque de diffusion (140) faisant directement face à la structure électroluminescente et un module d'entrée électromagnétique (200) disposé entre la structure électroluminescente et le panneau à cristaux liquides (300) ; et
le module d'entrée électromagnétique (200) comprend un diaphragme électromagnétique (210), qui est une plaque électromagnétique agencée pour coopérer avec un crayon électromagnétique, et un circuit de commande électromagnétique connecté électriquement au diaphragme électromagnétique (210), et le diaphragme électromagnétique (210) est connecté au circuit de commande principal (400) à travers le circuit de commande électromagnétique,
le diaphragme électromagnétique (210) est disposé entre la structure électroluminescente et le panneau à cristaux liquides (300),
le diaphragme électromagnétique (210) est disposé entre la structure électroluminescente et la plaque de diffusion (140), **caractérisé en ce que** le diaphragme électromagnétique (210) est transparent de manière à avoir une transmittance supérieure ou égale à 50 %, **en ce que**
une distance entre le diaphragme électromagnétique (210) et la structure électroluminescente est supérieure ou égale à 10 cm, et
**en ce qu'**une plaque d'acier au silicium est disposée entre le diaphragme électromagnétique (210) et la structure électroluminescente.

2. Module d'affichage de rétroéclairage de type direct selon l'une quelconque des revendications 1, **caractérisé en ce que** : le diaphragme électromagnétique (210) et la plaque de diffusion (140) ont la même forme et la même surface, et les bords du diaphragme électromagnétique sont alignés avec les bords de la plaque de diffusion (140) ; ou
une zone du diaphragme électromagnétique (210) est plus petite qu'une zone de la plaque de diffusion (140), et le diaphragme électromagnétique (210) est situé à un certain emplacement sur un côté circonférentiel de la plaque de diffusion (140).

3. Module d'affichage de rétroéclairage de type direct selon l'une quelconque des revendications 1, **caractérisé en ce que** le module d'affichage de rétroéclairage de type direct comprend en outre un module d'entrée tactile disposé sur le panneau à cristaux liquides (300), le module d'entrée tactile comprenant une carte électronique d'entrée tactile disposée sur le panneau à cristaux liquides et un circuit de commande tactile connectés à la carte électronique d'entrée tactile, et le circuit de commande tactile est connecté au circuit de commande principal (400).

4. Module d'affichage de rétroéclairage de type direct selon l'une quelconque des revendications 1, **caractérisé en ce qu'**il comprend en outre : un ensemble diaphragme optique (150) comprenant un diaphragme réfléchissant, un diaphragme d'amélioration de luminosité et un diaphragme de diffusion qui sont empilés de manière séquentielle,
dans lequel le diaphragme réfléchissant est aligné avec la plaque de diffusion (140), et le diaphragme de diffusion est aligné avec le panneau à cristaux liquides (300) ; et
le diaphragme d'amélioration de luminosité comprend un diaphragme à prisme, une microlentille et une plaque de polarisation réfléchissante qui sont disposés de manière séquentielle, le diaphragme à prisme est aligné avec le diaphragme réfléchissant et la plaque de polarisation réfléchissante est alignée avec le diaphragme de diffusion.

5. Module d'affichage à rétroéclairage de type direct selon l'une quelconque des revendications 1, **caractérisé en ce que** la structure électroluminescente comprend une barre lumineuse de type direct (120) disposée sur la plaque arrière (110) et faisant directement face à la plaque de diffusion (140), et une plaque réfléchissante (130) entourant un côté inférieur et un côté circonférentiel de la barre lumineuse de type direct (120) ; la plaque réfléchissante (130) est alignée avec la plaque de diffusion (140).

6. Dispositif d'affichage, **caractérisé en ce qu'**il comprend : un module de rétroéclairage selon l'une quelconque des revendications 1 à 5.
